# EUROPEAN PATENT APPLICATION

(11) **EP 3 516 951 A1**
(43) Date of publication of application: **31.07.2019**
(21) Application number: 18158691.8
(22) Date of filing: 26.02.2018
(51) Int. Cl.: A01G 9/28

(54) **LAWN SEPARATING SKIRT BOARD**

(30) Priority: 29.01.2018 CN 201820141973 U
(71) Applicant: Hebei Minmetals Co., Ltd., 050057 Shijiazhuang City, Hebei (CN)
(72) Inventor: Hu, Kebiao, 050057 Shijiazhuang (CN)
(74) Representative: Meinke, Jochen

(57) **Abstract**

The invention relates to a kind of lawn separating skirt board, structured with top edge ruffles on the top edge of the rectangular skirt board, end quickset on one end of the skirt board used to connect another skirt board, longitudinal groove between the skirt board and the end quickset, side edge ruffles on the other end of the skirt board used to connect the end quickset of another skirt board; the top edge of the said end quickset will not contact with the top edge ruffles of the other skirt board after quickset connection of two separating skirt boards, and bottom edge ruffles are provided on the rear of the said end quickset to contain the bottom edge of another skirt board.

## Description

The invention is related to a kind of isolating tool to separate lawns, specifically to a lawn separating skirt board.

CN204837190U disclosed a kind of lawn separating skirt board previously claimed by the applicant, structured with transversal top edge ruffles on the top edge of rectangular board, longitudinal side edge ruffles on one end of the board, and end quickset on the other end of the board; the end quickset is sidebar integrated with the board, with longitudinal groove between the both, which extends from the top edge of the board to the middle part of the board, parallel to the board sides; quickset space slightly larger than the board thickness is reserved between the side edge ruffles and the board surface, the upper end of side edge ruffles is close to the bottom edge of upper edge ruffles, and the sum of the length of side edge ruffles and the width of upper edge ruffles is less than the length of longitudinal groove. The lawn separating skirt boards can be stacked up for storage and transport, or jointed by the two adjacent separating boards, forming quickset assembly with different length, to reduce product occupying space and corporate cost, facilitate and speed up the connection operation, and improve work efficiency.

It is discovered, however, in application that the lawn separating skirt board is somewhat defective, i.e. when the joint of boards is beveled, the lower end of quickset is warped, leading to insecure joint, and consequently damage to the lawn separating skirt boards. In addition, in product manufacturing, the warped seam for quickset on the end of top edge ruffles needs to be corrected by process tooling and several operation steps, increasing cost and impacting productivity.

The invention aims to provide a kind of lawn separating skirt board, as a solution to the problems of high production cost and low productivity in case of warping of beveled lower end of quickset of the lawn separating skirt board.

The invention is realized in the following ways: a kind of lawn separating skirt board, structured with top edge ruffles on the top edge of the rectangular skirt board, end quickset on one end of the skirt board used to connect another skirt board, longitudinal groove between the skirt board and the end quickset, side edge ruffles on the other end of the skirt board used to connect the end quickset of another skirt board; the top edge of the said end quickset will not contact with the top edge ruffles of the other skirt board after quickset connection of two separating skirt boards, and bottom edge ruffles are provided on the rear of the said end quickset to contain the bottom edge of another skirt board, with the length of the said bottom edge ruffles no longer than the width of the side edge ruffles.

Loophole is lineally aligned to the sad longitudinal groove on the skirt board, to facilitate board beveling thereat to form angle of skirt board. Clip is provided on the joint of two separating skirt boards to connect the top edge ruffles, as the upper stop on the joint of boards, for more secured and stable joint of boards.

The invention adopts short end quickset, which will not enter into the upper ruffles even after inserted into place, to ensure complete fitting of upper ruffles without any seam at preparation of skirt boards, eliminating the need for relevant tooling and operation steps, reducing production cost, facilitating processing and preparation, as well as improving productivity. Bottom edge ruffles are provided on the rear of the end quickset, forming a bottom stop for the joint of skirt boards, to improve the connection strength of the joint, and avoid dog ear and warping, and in combination with the clip on the joint to connect the top edge of skirt board, to reinforce and stabilize the connection strength of skirt boards.

The invention is explained in more detail below with reference to the drawing. The drawing shows a structure and connection diagram of the invention.

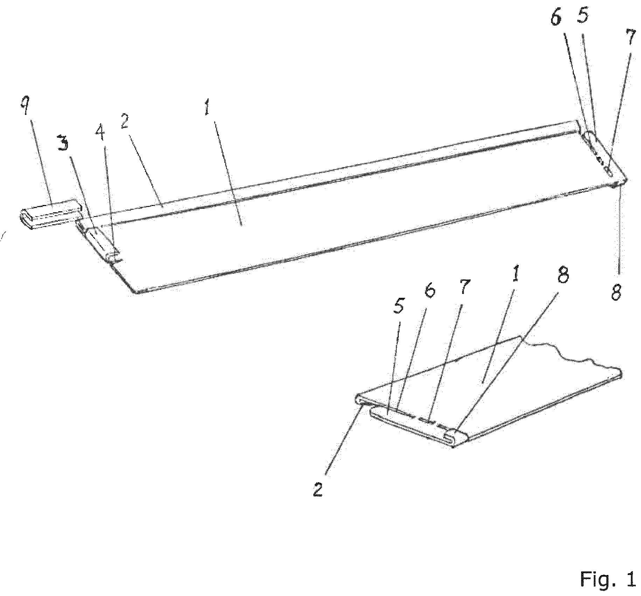

As shown in Figure 1, the skirt board 1 is rectangular metal sheet, with length between 110 to 180cm, and width between 12 to 22cm. The skirt board 1 is configured with upper edge ruffles 2, to improve the flexural strength of skirt boards.

End quickset 5 is provided on the right end of the skirt board 1 used to connect another board. Longitudinal groove 6 is provided between the skirt board 1 and end quickset 5, which extends from the top edge of end quickset 5 to the middle part of skirt board 1, parallel to the sides of skirt board 1. Two loopholes 7 are also provided on skirt board 1, lineally aligned to the longitudinal groove 6, to facilitate board beveling thereat, to form angle of separating skirt boards. The end quickset 5 of the invention is short quickset, i.e. the top edge of the quickset will not contact with the upper edge ruffles of the other skirt board after connection of both separating skirt boards, in this way, the top edge ruffles 2 on the skirt boards 1 can be completely fit without any seam in preparation of separating skirt boards, to facilitate processing, and improve the joint strength of separating skirt boards. Bottom edge ruffles 8 are provided on the rear of end quickset 5 (the bottom edge of skirt board), with length of no longer than the width of side edge ruffles, and certain space is reserved between the bottom edge ruffles 8 and the skirt board 1 (slightly larger than the thickness of skirt board), to facilitate the containing of the bottom edge of the other skirt board by the said bottom edge ruffles, forming the lower stop on the joint of boards, in quickset jointing of two separating skirt boards.

Side edge ruffles 3 are provided on the left end of skirt board 1, with its upper end close to the bottom edge of the upper edge ruffles 2, and its lower end extending to the middle part of skirt board 1. Certain space is reserved between side edge ruffles 3 and skirt board 1, to facilitate inserting of end quickset of the other skirt board during quickset jointing. A transversal groove 4 is provided on the skirt board 1 on the lower end of the adjacent side edge ruffles 3, with a length of no less than the width of side edge ruffles 3. The configuration of transversal groove 4 is aimed to allow appropriate turning-out of the edge of skirt board 1 on the lower part of side edge ruffles 3, to facilitate inserting of the end quickset 5 of the adjacent skirt board into the side edge ruffles 3 of the said skirt board.

After both separating skirt boards are quickset jointed, clip 9 is equipped on the joint to clamp the top edge ruffles on both skirt boards, forming the upper stop on the joint of boards, for more secured and stable joint of both boards.

### List of reference numbers:

- 1: Skirt board
- 2: Top edge ruffles
- 3: Side edge ruffles
- 4: Transversal groove
- 5: End quickset
- 6: Longitudinal groove
- 7: Loophole
- 8: Bottom edge ruffles
- 9: Clip

## Claims

1. Lawn separating skirt board (1), structured with top edge ruffles (2) on the top edge of the rectangular skirt board, end quickset (5) on one end of the skirt board used to connect another skirt board, longitudinal groove between (6) the skirt board and the end quickset (5), side edge ruffles (3) on the other end of the skirt board used to connect the end quickset of another skirt board,
**characterized in**
**that** the top edge of the said end quickset (5) will not contact with the top edge ruffles (2) of the other skirt board after quickset connection of two separating skirt boards, and bottom edge ruffles (8) are provided on the rear of the said end quickset (5) to contain the bottom edge of another skirt board, with the length of the said bottom edge ruffles (8) not longer than the width of the side edge ruffles (3).

2. Lawn separating skirt board according to claim 1,
**characterized by**
a loophole (7) lineally aligned to the said longitudinal groove (6).

3. Lawn separating skirt board according to claim 1,
**characterized in**
**that** clips (9) are provided on the joint of the said separating skirt boards to connect the top edge ruffles (2).
